# EUROPEAN PATENT SPECIFICATION

(11) **EP 3 291 638 B1**
(45) Date of publication and mention of the grant of the patent: **02.10.2019**
(21) Application number: 17187649.3
(22) Date of filing: 24.08.2017
(51) Int. Cl.: H05B 3/22, F24D 13/02, H05B 3/34, H05B 1/02

(54) **HEATED PTC ELEMENT WITH PROTECTION CIRCUIT**
BEHEIZTES PTC-ELEMENT MIT SCHUTZSCHALTUNG
ÉLÉMENT PTC CHAUFFÉ AVEC CIRCUIT DE PROTECTION

(30) Priority: 01.09.2016 US 201615254023
(43) Date of publication of application: 07.03.2018
(60) Divisional application: 19193847.1
(73) Proprietor: Hamilton Sundstrand Corporation, Charlotte, NC 28217-4578 (US)
(72) Inventor: SHEARER, Jon, Hartville, OH 44632 (US)
(74) Representative: Dehns

(56) References cited:
- EP-A1- 3 015 360
- EP-A2- 2 199 063
- DE-A1-102008 006 017
- US-A- 5 361 183
- US-A1- 2010 065 542
- US-A1- 2011 149 447

## Description

### BACKGROUND OF THE INVENTION

This application relates to a heated PTC element having a fault protection circuit.

Heated floor panels are known and utilized in any number of applications. One proposed application is in an aircraft cabin. In particular, a location near an aircraft door is being considered to be provided with such panels.

One type of heated floor panel is a positive temperature coefficient ("PTC") panel. Such panels are formed of a material that heats when provided with electric current. Conductors are interlaced within a substrate of PTC material and current is supplied to the conductors, which, in turn, causes the substrate to heat.

There are concerns with these panels, particularly, as occupants of the aircraft cabin are exposed to the panels. One concern has to do with shock hazards or dielectric breakdown, which can lead to arcing or smoke damage. As an example, if the panel is damaged, the PTC could be compromised. US 2010/065542 A1 relates to an electrical heater with a resistive neutral plane. US 5361183 A relates to ground fault protection for electrothermal de-icing applications.

### SUMMARY OF THE INVENTION

A heater electrical short protection arrangement, as described in claim 1, has a heating layer that is at least partially electrically conductive. A conductive layer is initially electrically insulated from the heating layer. A circuit in electrical communication with the conductive layer is configured to halt a supply of electrical energy to the heating layer in response to current flowing into the conductive layer.

A method, as described in claim 10, is also disclosed.

These and other features may be best understood from the following drawings and specification, the following of which is a brief description.

### BRIEF DESCRIPTION OF THE DRAWINGS

Figure 1A schematically shows a heated floor panel in an aircraft.
Figure IB shows a safety circuit.
Figure 2 shows an example of damage to a panel.
Figure 3 shows a first location for the safety circuit.
Figure 4 shows an alternative location.

### DETAILED DESCRIPTION

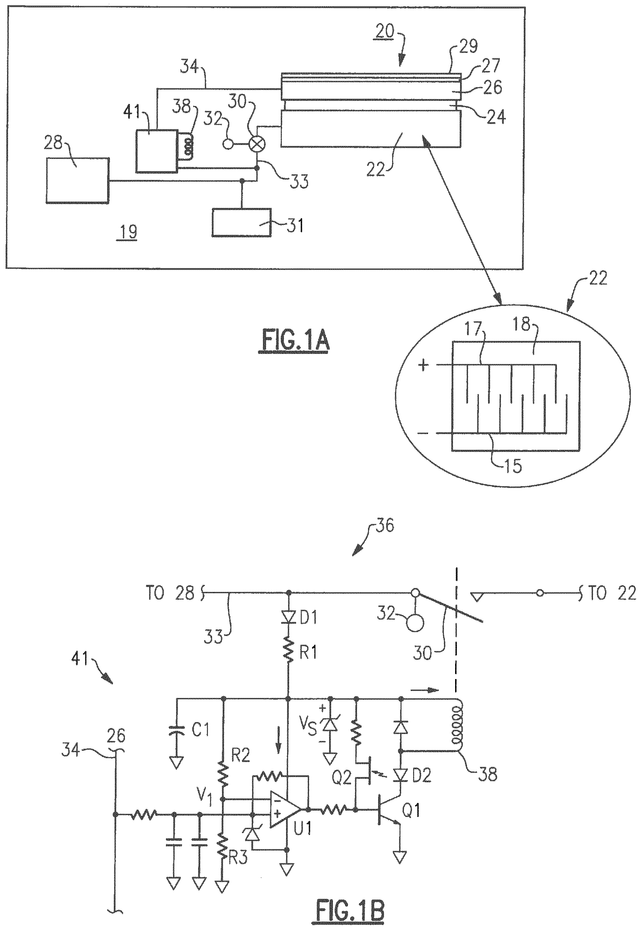

Figure 1A shows an aircraft cabin 19 schematically. A heated floor panel 20 is located in an aircraft cabin. As an example, the heated floor panel 20 may be placed near an aircraft door. The heated floor panel 20 is generally as known and includes a heating layer 22 including conductors 15 and 17 and a substrate 18 of a PTC material that will heat when exposed to the current from conductors 15 and 17.

Heated floor panels are generally known. The heating layer 22 is formed of a substrate that may be any number of materials. As examples, a carbon-loaded silicone-based film may be utilized. Alternatively, an ink/paste layer may be utilized as the substrate. Further, a PTC material may coat a fabric. The spacing of the conductors is designed based upon desired heat-up rates, power density, and heating patterns. The PTC substrate is tailored through chemistry, thickness, length, etc. to control heater performance.

In general, a PTC heating layer is characterized as reaching a desired temperature. At the point it reaches its desired temperature, the resistance of the substrate increases greatly which will limit the flow of power to the heater. Thus, a PTC heating layer could be characterized as operating around a steady-state design temperature.

An insulating layer 24 separates the heating layer 22 from an electrically conductive layer 26. The layer 26 can be a guard screen or a film. The insulating layer 24 may be a dielectric material. Another insulating layer 27 and an outer skin 29 may be included.

Power is supplied from 28 to the heating layer 22. A control 31 controls the amount of current flowing through a supply line 33 to the heating layer 22.

A protection circuit 41 is shown mounted on supply line 33. A switch 30 is downstream of protection circuit 41. Protection circuit 41 may be provided with a transformer 38 that can operate an optical latch circuit 32 to open the switch 30 under certain conditions. As shown, line 31 communicates layer 26 to circuit 41.

Figure 1B shows an example protection circuit 41. When current flows through the line 33, power from 28 energizes Vs through D₁, R₁, and C₁. A voltage V₁ is developed across R₃ for reference to U₁ minus an input. As shown, circuit 41 also communicates with layer 26 through line 34. If current flows into 26 (as explained below), then a conductive layer 26 voltage may exceed V₁. If so, U₁ will activate Q₁ and coil 38 which opens switch 30. Optical light from D₂ activates Q₂, latching Q₁ on, holding coil 38 active, and switch 30 open until power from 28 is removed. Any other circuit that can operate to open a switch should current flow in layer 26 may be utilized.

As long as the insulation layer 24 sits between the conductive layer 26 and heating layer 22, no voltage will exist on line 34. Under these conditions, the circuit 41 will not open the switch 30. Thus, the heated floor panel 20 can operate to heat a floor.

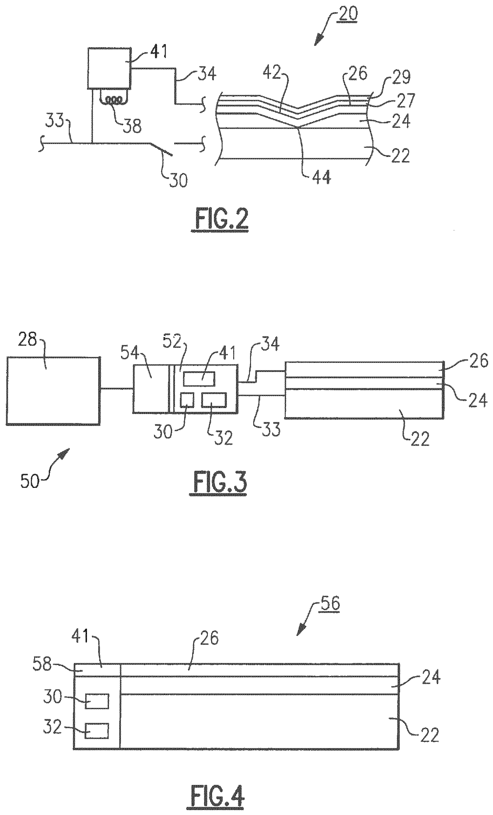

Figure 2 shows damage 42 to the heated floor panel 20. Perhaps a knife or heavy object has been dropped on the panel. As shown, a point 44 exists where the conductive layer 26 is now in contact with the heating layer 22. This will cause current flow into conductive layer 26.

At such a point, the circuit 41 will see the voltage on line 34 and open the switch 30, as shown.

This will stop current flow from source 28 to the heating layer 22. Once power is shut off, the switch 30 will return to a closed position and the panel can be repaired or otherwise evaluated.

Figure 3 shows a first potential location wherein the protection circuit 41, the switch 30, and the control 31 are all placed within a portion 52 of a connector that is connected at 54 to the power supply 28.

Figure 4 shows an alternative embodiment 56 wherein a side compartment 58 receives the protection circuit 41, switch 30, and control 31.

While a heated floor panel is utilized, the protective benefits of this disclosure may extend to other PTC heater applications.

The protection features of this disclosure would benefit other type heating layers than just PTC heaters. Also, protection circuits that stop the supply of electrical energy to the heating layer in ways other than opening a switch may come within the scope of this disclosure.

Thus, the disclosure could be broadly stated as comprising a heater electrical short protection arrangement having a heating layer being at least partially electrically conductive. A conductive layer initially electrically insulated from the heating layer. A circuit in electrical communication with the conductive layer configured to halt a supply of electrical energy to the heating layer in response to current flowing into the conductive layer.

The disclosure also extends to a method of providing heat that includes supplying power to a heating layer that is at least partially electrically conductive and with a conductive layer electrically insulated from the heating layer. A circuit in electrical communication with the conductive layer, selectively stopping the supply of power to the heating layer should current flow into the conductive layer.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A heater electrical short protection arrangement comprising:
a heating layer (22) being at least partially electrically conductive;
a conductive layer (26) initially electrically insulated from the heating layer; and
a circuit (41) in electrical communication with the conductive layer configured to halt a supply of electrical energy to the heating layer in response to current flowing into the conductive layer;
**characterized in that** said heating layer has a positive temperature coefficient material;
wherein said circuit is configured to open a switch (30) to stop the supply of electrical energy; and
wherein said electrical short protection arrangement is configured such that if there is damage to said heating layer, said conductive layer may be forced into contact with a portion of said heating layer to supply current into said conductive layer, and cause said protection circuit to actuate said switch.

2. The arrangement as set forth in claim 1, wherein said circuit includes a transformer (38) to open said switch if current flows into said conductive layer.

3. The arrangement as set forth in claim 1, wherein said switch is on a line connecting a power supply (28) to said heating layer.

4. The arrangement as set forth in any preceding claim, wherein said conductive layer is a guard screen, or wherein said conductive layer is a film.

5. The arrangement as set forth in any preceding claim, wherein said heating layer includes electric conductors (15, 17) and a substrate (18) formed of a positive temperature coefficient material, and said heating layer (22) having a design temperature and a resistance of said heating layer increasing when said design temperature is reached.

6. The arrangement as set forth in any preceding claim, wherein an insulating layer (24) is included between said heating layer and said conductive layer.

7. The arrangement as set forth in any preceding claim, wherein said circuit is received in an electrical connector connecting said heating layer to a current supply, or wherein said circuit is received in a compartment to one side of said heating layer.

8. The arrangement as set forth in any preceding claim, wherein said heater is a heated floor panel (20).

9. The arrangement as set forth in claim 8, wherein said heated floor panel is to be utilized in an aircraft cabin.

10. A method of providing heat comprising:
supplying power to a positive temperature coefficient heating layer that is at least partially electrically conductive, and a conductive layer electrically insulated from the heating layer;
a circuit in electrical communication with said conductive layer, selectively stopping the supply of power to said heating layer should current flow into said conductive layer;
wherein said circuit opens a switch (30) to stop the supply of electrical energy; and
wherein if there is damage to said heating panel, said conductive layer is forced into contact with a portion of said heating layer to supply current into said conductive layer, and cause said circuit to stop the supply of power to said heating layer.

## Patentansprüche

1. Elektrische Kurzschlussschutzanordnung für eine Heizvorrichtung, umfassend:
eine Heizschicht (22), die zumindest teilweise elektrisch leitfähig ist;
eine leitfähige Schicht (26), die anfänglich elektrisch von der Heizschicht isoliert ist; und
eine Schaltung (41), die in elektrischer Kommunikation mit der leitfähigen Schicht steht und konfiguriert ist, um eine Zufuhr elektrischer Energie zur Heizschicht als Reaktion darauf, dass Strom in die leitfähige Schicht fließt, zu unterbrechen;
**dadurch gekennzeichnet, dass** die Heizschicht ein Material mit positivem Temperaturkoeffizienten aufweist;
wobei die Schaltung konfiguriert ist, um einen Schalter (30) zu öffnen, um die Zufuhr elektrischer Energie zu stoppen;
und
wobei die elektrische Kurzschlussschutzanordnung so konfiguriert ist, dass, wenn die Heizschicht beschädigt ist, die leitfähige Schicht in Kontakt mit einem Abschnitt der Heizschicht gedrängt werden kann, um Strom in die leitfähige Schicht zu liefern, und die Schutzschaltung zu veranlassen, den Schalter zu betätigen.

2. Anordnung nach Anspruch 1, wobei die Schaltung einen Stromwandler (38) beinhaltet, um den Schalter zu öffnen, wenn Strom in die leitfähige Schicht fließt.

3. Anordnung nach Anspruch 1, wobei der Schalter auf einer Leitung liegt, die eine Energieversorgung (28) mit der Heizschicht verbindet.

4. Anordnung nach einem der vorstehenden Ansprüche, wobei die leitfähige Schicht ein Schutzschirm ist oder wobei die leitfähige Schicht ein Film ist.

5. Anordnung nach einem der vorstehenden Ansprüche, wobei die Heizschicht elektrische Leiter (15, 17) und ein Substrat (18), das aus einem Material mit positivem Temperaturkoeffizienten gebildet ist, beinhaltet und die Heizschicht (22) eine Auslegungstemperatur aufweist und ein Widerstand der Heizschicht zunimmt, wenn die Auslegungstemperatur erreicht wird.

6. Anordnung nach einem der vorstehenden Ansprüche, wobei eine Isolationsschicht (24) zwischen der Heizschicht und der leitfähigen Schicht beinhaltet ist.

7. Anordnung nach einem der vorstehenden Ansprüche, wobei die Schaltung in einem elektrischen Anschluss aufgenommen ist, der die Heizschicht mit einer Stromversorgung verbindet, oder wobei die Schaltung in einem Fach an einer Seite der Heizschicht aufgenommen ist.

8. Anordnung nach einem der vorstehenden Ansprüche, wobei die Heizvorrichtung eine beheizte Bodenplatte (20) ist.

9. Anordnung nach Anspruch 8, wobei die beheizte Bodenplatte in einer Kabine eines Luftfahrzeugs zu verwenden ist.

10. Verfahren zum Bereitstellen von Wärme, umfassend:
Zuführen von Energie zu einer Heizschicht mit positiven Temperaturkoeffizienten, die zumindest teilweise elektrisch leitfähig ist, und einer leitfähigen Schicht, die elektrisch von der Heizschicht isoliert ist;
eine Schaltung in elektrischer Kommunikation mit der leitfähigen Schicht, die selektiv die Zufuhr von Energie zur Heizschicht stoppt, sollte Strom in die leitfähige Schicht fließen;
wobei die Schaltung einen Schalter (30) öffnet, um die Zufuhr elektrischer Energie zu stoppen; und
wobei, wenn die Heizplatte beschädigt ist, die leitfähige Schicht in Kontakt mit einem Abschnitt der Heizschicht gedrängt wird, um Strom in die leitfähige Schicht zu liefern, und die Schaltung zu veranlassen, die Zufuhr von Energie zur Heizschicht zu stoppen.

## Revendications

1. Agencement de protection de chauffage contre les courts-circuits électriques comprenant :
une couche chauffante (22) qui est au moins partiellement électriquement conductrice ;
une couche conductrice (26) initialement électriquement isolée de la couche chauffante ; et
un circuit (41) en communication électrique avec la couche conductrice configuré pour arrêter une alimentation en énergie électrique de la couche chauffante en réponse à un courant circulant dans la couche conductrice ;
**caractérisé en ce que** ladite couche chauffante comporte un matériau à coefficient de température positif ;
dans lequel ledit circuit est configuré pour ouvrir un interrupteur (30) en vue d'arrêter l'alimentation en énergie électrique ;
et
dans lequel ledit agencement de protection contre les courts-circuits électriques est configuré pour que si ladite couche chauffante est endommagée, ladite couche conductrice peut être forcée en contact avec une portion de ladite couche chauffante pour alimenter en courant ladite couche conductrice, et amener ledit circuit de protection à actionner ledit interrupteur.

2. Agencement selon la revendication 1, dans lequel ledit circuit inclut un transformateur (38) pour ouvrir ledit interrupteur si un courant circule dans ladite couche conductrice.

3. Agencement selon la revendication 1, dans lequel ledit interrupteur est sur une ligne connectant une alimentation électrique (28) à ladite couche chauffante.

4. Agencement selon une quelconque revendication précédente, dans lequel ladite couche conductrice est un écran de protection, ou dans lequel ladite couche conductrice est un film.

5. Agencement selon une quelconque revendication précédente, dans lequel ladite couche chauffante inclut des conducteurs électriques (15, 17) et un substrat (18) formés d'un matériau à coefficient de température positif, et ladite couche chauffante (22) ayant une température de calcul et une résistance de ladite couche chauffante augmentant lorsque ladite température de calcul est atteinte.

6. Agencement selon une quelconque revendication précédente, dans lequel une couche isolante (24) est incluse entre ladite couche chauffante et ladite couche conductrice.

7. Agencement selon une quelconque revendication précédente, dans lequel ledit circuit est reçu dans un connecteur électrique connectant ladite couche chauffante à une alimentation en courant, ou dans lequel ledit circuit est reçu dans un compartiment vers un côté de ladite couche chauffante.

8. Agencement selon une quelconque revendication précédente, dans lequel ledit chauffage est un panneau de plancher chauffant (20).

9. Agencement selon la revendication 8, dans lequel ledit panneau de plancher chauffant est destiné à être utilisé dans une cabine d'aéronef.

10. Procédé de fourniture de chaleur comprenant :
l'alimentation en puissance d'une couche chauffante à coefficient de température positif qui est au moins partiellement électriquement conductrice, et d'une couche conductrice électriquement isolée de la couche chauffante ;
un circuit en communication électrique avec ladite couche conductrice, l'arrêt sélectif de l'alimentation en puissance de ladite couche chauffante si un courant circule dans ladite couche conductrice ;
dans lequel ledit circuit ouvre un interrupteur (30) pour arrêter l'alimentation en énergie électrique ;
et
dans lequel si ledit panneau chauffant est endommagé, ladite couche conductrice est forcée en contact avec une portion de ladite couche chauffante pour alimenter en courant ladite couche conductrice, et amener ledit circuit à arrêter l'alimentation en puissance de ladite couche chauffante.
